Europäisches Patentamt

European Patent Office

Office européen des brevets

(11) Publication number: **0 172 601
B1**

## (12) EUROPEAN PATENT SPECIFICATION

(45) Date of publication of patent specification: **10.01.90**

(21) Application number: **85300672.4**

(22) Date of filing: **31.01.85**

(51) Int. Cl.⁵: **B 60 K 41/02, F 02 D 41/08,
F 02 D 41/12**

(54) Control system for a motor vehicle propulsion unit.

(30) Priority: **01.02.84 JP 17296/84**

(43) Date of publication of application:
**26.02.86 Bulletin 86/09**

(45) Publication of the grant of the patent:
**10.01.90 Bulletin 90/02**

(84) Designated Contracting States:
**AT CH DE FR GB IT LI NL SE**

(56) References cited:
**DE-A-2 710 157
FR-A-2 469 313
GB-A-2 043 173
GB-A-2 083 588
JP-A-58 030 457**

**PATENT ABSTRACTS OF JAPAN, vol. 7, no. 110
(M-214)1255r, 13th May 1983**

(73) Proprietor: **FUJI JUKOGYO KABUSHIKI KAISHA
7-2 Nishishinjuku 1-chome Shinjuku-ku
Tokyo (JP)**
(73) Proprietor: **Van Doorne's Transmissie B.V.
Dr. Hub van Doorneweg 120 Postbus 500
NL-5026 RA Tilburg (NL)**

(72) Inventor: **Miyawaki, Motohisa
2490-3, Jindaijimachi
Chofu-shi Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Description

The present invention relates to a control system for an infinitely variable transmission, and more particularly relates to an infinitely variable belt-drive transmission with an electromagnetic clutch for transmitting power of an automotive engine to driving wheels of a vehicle.

For the purpose of improving the fuel consumption of the automotive engine, a fuel control system for cutting off fuel during coasting of a vehicle is disclosed in Japanese Laid-Open Patent Specification No. 57-131842. The system is such that, when the accelerator pedal is not depressed at a vehicle speed higher than a predetermined high value, fuel is cut off, and, when the accelerator pedal is subsequently depressed or the speed falls below the predetermined value, fuel is re-supplied, thereby restarting the engine.

Japanese Laid-Open Patent Application No. 58-030457 discloses a control system for a vehicle driven by an engine through a step gear transmission including an electromagnetic clutch for connecting the crankshaft of the engine with an input shaft of the transmission. A fuel cut system of the engine re-supplies fuel if a vehicle speed switch indicates a vehicle speed below a predetermined low speed value. The electomagnetic clutch is disengaged with some delay when the vehicle speed drops below said predetermined low value and fuel being resupplied to the engine avoids the engine stalling as might otherwise occur.

On the other hand, an infinitely variable belt-drive transmission connected to a crankshaft of an engine through an electromagnetic clutch is proposed by the applicant of this patent application. The transmission is provided with a selector device for changing the transmission to forward drive state (D range), reverse drive state (R range) or neutral state (N range). When the N range is selected, clutch current is cut off to disengage the electromagnetic clutch.

If an infinitely variable belt-drive transmission connected to the crankshaft of the engine through an electromagnetic clutch is provided with a fuel cut off system as described above, the system must be so arranged that, when the N range is selected from the D range under the fuel cut off state, fuel is supplied to re-start the engine. During the D range driving under the fuel cut off state, the engine is driven by the wheels of the coasting vehicle through the transmission system and the electromagnetic clutch. In such a condition, when the N range is selected and the electromagnetic clutch is disengaged, the engine speed falls because of the small intertial mass of a drive member of the clutch which is connected to the crankshaft of the engine. If the supply of fuel is delayed at the selection of the N range, the engine cannot be re-started owing to very low engine speed. The belt-drive transmission is provided with oil pressure servo devices for shifting movable conical discs of the drive and the driven pulleys to keep the belt at proper positions on the pulleys. When the engine stalls, an oil pump for supplying the oil under pressure stops, resulting in a decrease in the pressure of the oil. Hence, the movable conical discs of the pulleys fail to keep the belt at its proper position on the pulleys and so the belt slips on the pulleys which causes breakdown of the transmission.

An object of the present invention is to provide a system for an infinitely variable transmission which removes the above-described disadvantage which occurs at the selection of the N range from the D range under the fuel cut off state.

A control system for a vehicle driven by an engine through an infinitely variable transmission including an electromagnetic clutch for connecting the crankshaft of the engine with an input shaft of the transmission, the control system comprising the first means for producing an electrical signal when the vehicle speed exceeds a predetermined value; second means for indicating the selection of the forward drive state of the transmission; third means for producing a signal when the accelerator pedal of the vehicle is not depressed; fourth means arranged to cut off the fuel to the engine when signals from each of the first, second and third means are received; and characterised by fifth means for indicating the selection of the neutral state of the transmission at the disappearance of the indication of the second means, sixth means responsive to the output signal of the fifth means under the fuel cut off state for delaying the disengagement of the electromagnetic clutch.

In order that the invention may be more readily understood, it will now be described, by way of example only, with reference to the accompanying drawings, in which:-

Figure 1 is a sectional view of an infinitely variable belt-drive transmission to which the present invention is applied;

Figure 2 is a block diagram showing an embodiment of the present invention; and

Figures 3a to 3c show waveforms illustrating operations of the system of Figure 2.

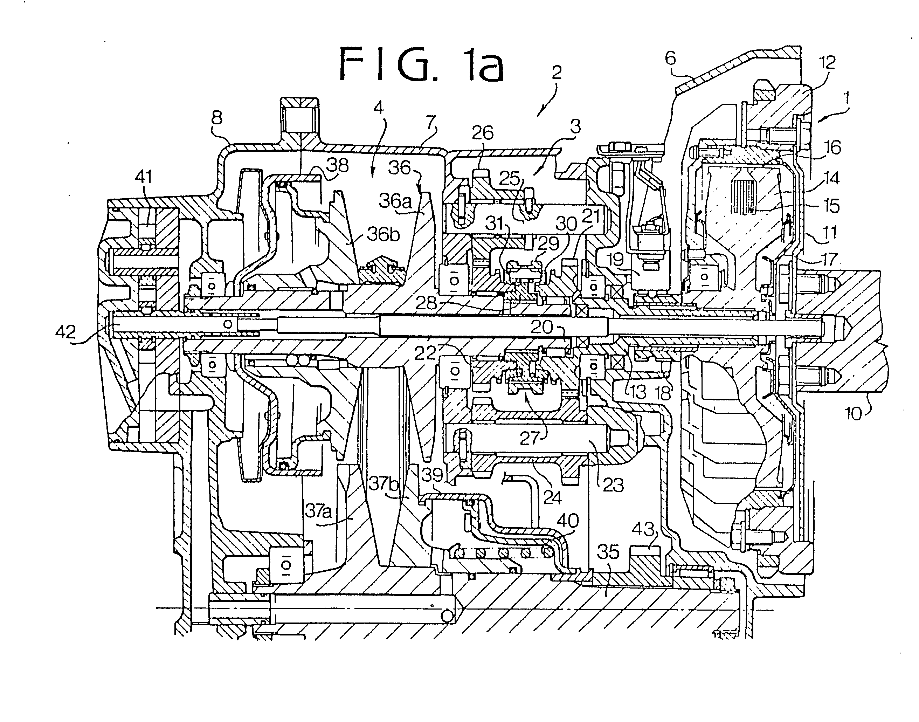

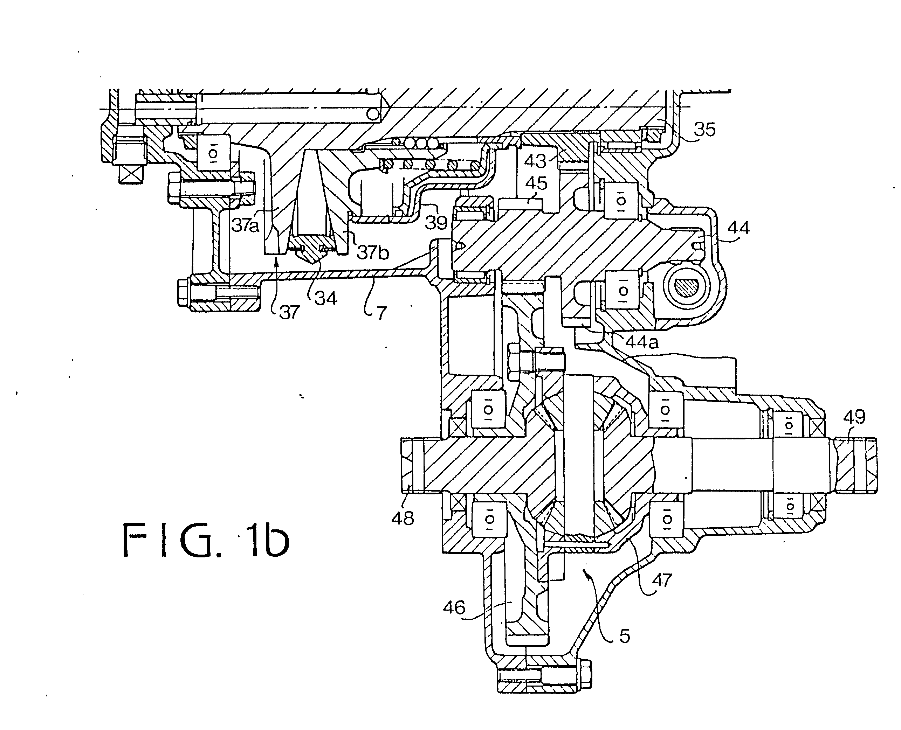

Referring to Figure 1, an infinitely variable belt-drive automatic transmission for a vehicle, to which the present invention is applied, comprises an electromagnetic powder clutch 1, an infinitely variable belt-drive transmission 2, a selector device 3, pulleys and belt device 4, final reduction device 5, and pressure oil control circuit (not shown). The electromagnetic powder clutch 1 is provided in a housing 6, and the selector device 3, pulleys, belt device 4 and final reduction device 5 are provided in a main housing 7 and a side housing 8. A crankshaft 10 of an engine (not shown) is connected to an annular drive member 12 through a drive plate 11 of the electromagnetic powder clutch 1. The electromagnetic powder clutch comprises a driven member 14 and a magnetising coil 15 provided in the driven member 14. The driven member 14 has its outer periphery spaced from the inner periphery of the drive member 12 by a gap 16, and a powder chamber 17 is defined between the drive member 12 and driven member 14. The powder chamber 17 is filled with powder of magnetic material. The driven member 14 is secured to an input shaft 13 of the belt-drive transmission. A holder secured to the driven member 14 carries slip rings 18 which are electrically connected to the coil 15. The coil 15 is supplied through brushes 19 and slip rings 18 with current from a control circuit for the electromagnetic powder clutch.

When the magnetising coil 15 is excited by clutch current, driven member 14 is magnetised to produce a magnetic flux passing through the drive member 12. The magnetic powder is aggregated in the gap 16 by the magnetic flux and the driven member 14 is engaged with the drive member 12 by the powder. On the other hand, when the clutch current is cut off, the drive and driven members 12 and 14 are disengaged from one another.

In the belt-drive transmission 2, the selector device 3 is provided between the input shaft 13 and a main shaft 20. The main shaft 20 is cylindrical and is disposed coaxially with the input shaft 13. The selector device 3 comprises a drive gear 21 integral with input shaft 13, reverse driven gear 22 rotatably mounted on the main shaft 20, and a synchroniser 27 mounted on the main shaft 20. The drive gear 21 meshes with one of a counter gear assembly 24 rotatably mounted on a shaft 23. Another gear of the counter gear assembly 24 engages with an idler gear 26 rotatably mounted on a shaft 25, which, in turn, engages with the driven gear 22.

The synchroniser 27 comprises a hub 28 secured to the main shaft 20, a synchroniser sleeve 29 slidably engaged with the hub 28 with splines, and synchroniser rings 30 and 31. The synchroniser sleeve 29 is adapted to engage with splines of the drive gear 21 or with splines of driven gear 22 through rings 30 or 31.

At a neutral position (N range) of a selector lever (not shown), the sleeve 29 does not engage either gear, so that the main shaft 20 is disconnected from the input shaft 13. When the sleeve 29 is engaged with the gear 21, the input shaft 13 is connected to the main shaft 20 through the gear 21 and synchroniser 27 to provide the D range.

When the sleeve 29 is engaged with the gear 22, the input shaft 23 is connected to the main shaft 20 through gears 21, 24, 26 and 22 to provide R range.

The main shaft 20 has an axial passage in which an oil pump driving shaft 42 connected to crankshaft 10 is mounted. An output shaft 35 is provided in parallel with the main shaft 20. A drive pulley 36 and a driven pulley 37 are mounted on shafts 20 and 35. An axially fixed conical disc 36a of the drive pulley 36 is integral with main shaft 20 and an axially movable conical disc 36b is axially slidably mounted on the main shaft 20. The movable conical disc 36b also slides in a cylinder secured to the main shaft 20 to form a servo device 38. A chamber of the servo device 38 communicates with a gear pump 41 through the pressure oil control circuit. The gear pump 41 is driven by the shaft 42.

A fixed conical disc 37a of the driven pulley 37 is formed on the output shaft 35 opposite the movable disc 36b and a movable conical disc 37b is slidably mounted on the shaft 35 opposite disc 36a. Movable conical disc 37b has a cylindrical portion in which a piston portion of the output shaft 35 is slidably engaged to form a servo device 39. A chamber of the servo device 39 is communicated with the oil pump 41 through the pressure oil control circuit. A spring 40 is provided to urge the movable conical disc 37b to the fixed conical disc 37a. A drive belt 34 engages with the drive pulley 36 and the driven pulley 37.

Secured to the output shaft 35 is a drive gear 43 which engages with an intermediate reduction gear 44a on an intermediate shaft 44. An intermediate gear 45 on the shaft 44 engages with a final gear 46. Rotation of the final gear 46 is transmitted to axles 48 and 49 of the vehicle driving wheels through a differential 47.

The pressure oil control circuit is responsive to vehicle speed, engine speed and throttle valve position for controlling the pressure oil supply to servo devices 38 and 39 thereby to move discs 36b and 37b. Thus, transmission ratio is infinitely changed. The selector lever is so arranged that it can be further shifted in addition to the D range position for a Ds range. When the Ds range is selected, the pressure oil control circuit is set to provide a special driving transmission ratio which is suitable for active driving of the vehicle.

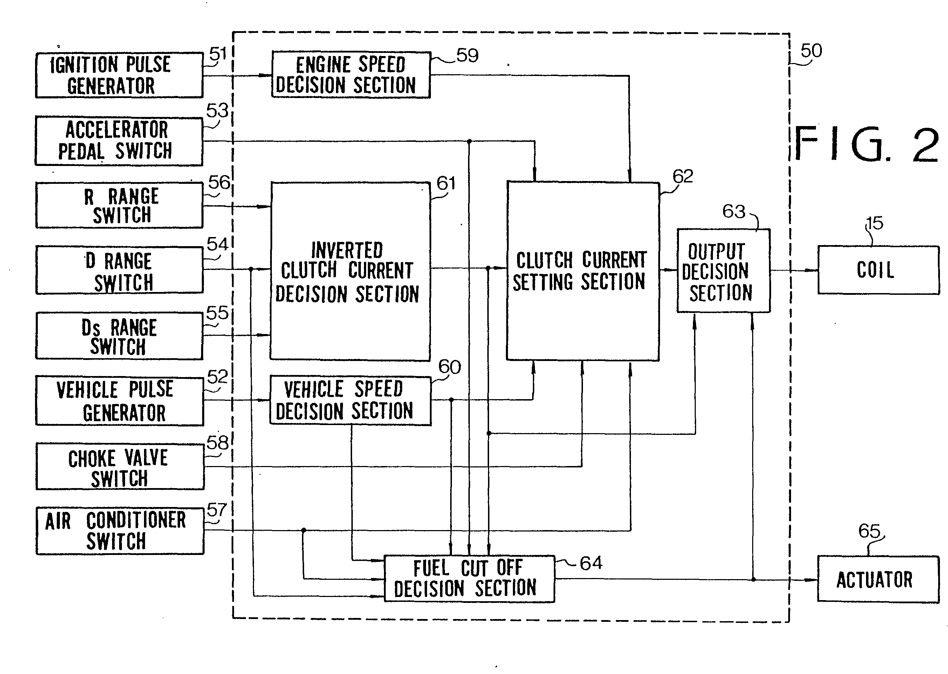

Referring to Figure 2, which shows a fuel cut off control system, the system is provided with a control unit 50 supplied with a plurality of input signals. A signal representative of engine speed is provided by an ignition pulse generator 51; a signal representative of vehicle speed is provided by 52; signals are also provided by accelerator pedal switch 53, range switches 54 - 56 representing the D range, Ds range, and R range, air conditioner switch 57, and choke valve switch 58. The range switches 54 - 56 produce output signals when respective ranges are selected by the selector lever.

The control unit 50 comprises a computer and has an engine speed decision section 59 supplied with ignition pulses from the ignition pulse generator 51, a vehicle speed decision section 60, and an inverted clutch current decision section 61 supplied with signals from range switches 54 - 56. A clutch current setting section 62 is provided and is supplied with output signals from sections 59 - 61 and switches 53, 57 and 58 to set clutch current. Further, output of the clutch current setting section 62 is supplied to an output decision section 63 to produce an output for the coil 15.

On the other hand, a fuel cut off decision section 64 is provided and is supplied with signals from switches 53, 54, 57, 58 and with signals from decision sections 60 and 61 to produce an output for operating an actuator 65 for the cutting off of the fuel.

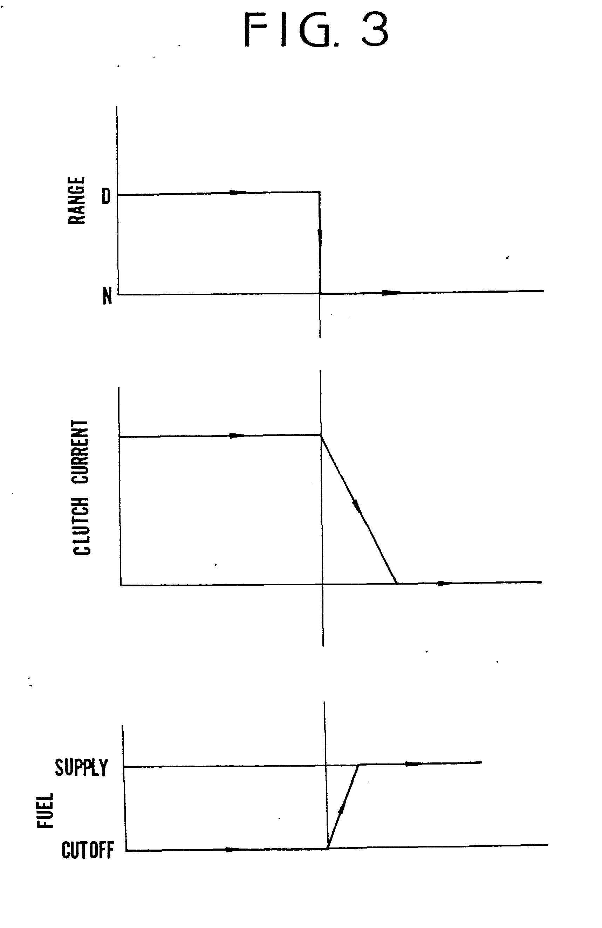

Operation of the system will now be described with reference to Figures 2 and 3. With the transmission in the D range, when the vehicle speed is higher than a predetermined value and the accelerator pedal is released, the fuel cut off decision section 64 produces an output in response to input signals from the accelerator pedal switch 53, the D range switch 54 and vehicle speed decision section 60 to actuate the actuator 65. Thus, the fuel is cut off during coasting at high speed. At the same time, the output decision section 63 is producing an output so that clutch current flows, as shown in Figure 3b, to engage the clutch. Accordingly, the engine is driven by the wheels of the vehicle through the transmission system and the clutch.

If the selector lever is shifted to the neutral position (N range), as shown in Figure 3a, this causes the fuel cut off decision section 64 to stop producing an output because of the disappearance of the signal from D range switch 54. Accordingly, the actuator 65 operates to supply fuel, as shown in Figure 3c. On the other hand, the clutch current setting section 62 and output decision section 63 operates to gradually decrease the clutch current, as shown in Figure 3b. Thus, disengagement of the clutch is delayed. During the partial engagement of the clutch, a comparative large inertial mass of driven members, comprising the driven member 14, input shaft 13, gears 21, 24, 26 and 22, is applied to the crankshaft 10 of the engine to keep it rotating. As the fuel is resupplied under such a partial engagement clutch condition, the engine is reliably started.

From the foregoing, it will be understood that the present invention provides a control system for an infinitely variable transmission in which the disengagement of the clutch is delayed when the N range is selected under conditions at a vehicle speed higher than a predetermined value during the D range, thereby preventing the engine from stalling.

## Claims

1. A control system for a vehicle driven by an engine through an infinitely variable transmission including an electromagnetic clutch for connecting the crankshaft of the engine with an input shaft of the transmission, the control system comprising: the first means (52) for producing an electrical signal when the vehicle speed exceeds a predetermined value; second means (54, 55) for indicating the selection of the forward drive state of the transmission; third means (53) for producing a signal when the accelerator pedal of the vehicle is not depressed; fourth means (64) arranged to cut off the fuel to the engine when signals from each of the first, second and third means are received; and characterised by fifth means for indicating the selection of the neutral state of the transmission at the disappearance of the indication of the second means, sixth means (63) responsive to the output signal of the fifth means under the fuel cut off state for delaying the disengagement of the electromagnetic clutch.

2. A control system as claimed in claim 1, characterised in that the fourth (64) and sixth (63) means comprise a computer.

## Patentansprüche

1. Steuersystem für ein Fahrzeug, das von einem Motor über ein stufenlos verstellbares Getriebe angetrieben wird und eine elektromagnetische Kupplung zum Kuppeln der Kurbelwelle des Motors mit einer Eingangswelle des Getriebes enthält, wobei das Steuersystem erste Mittel (52) zum Erzeugen eines elektrischen Signals enthält, wenn die Fahrzeuggeschwindigkeit einen vorbestimmten Wert übersteigt, zweite Mittel (54, 55) zum Anzeigen des gewählten Vorwärtsganges des Getriebes, dritte Mittel (53) zum Erzeugen eines Signals, wenn das Gaspedal des Fahrzeuges nicht betätigt ist, und vierte Mittel (64) zum Abschalten der Treibstoffzufuhr zum Motor, wenn Signale von den ersten, zweiten und dritten Mitteln empfangen werden, gekennzeichnet durch fünfte Mittel, die die Wahl des Leerlaufzustandes des Getriebes bei dem Verschwinden der Anzeige der zweiten Mittel anzeigen, sowie sechste Mittel (63), die auf das Ausgangssignal der fünften Mittel bei abgeschalteter Treibstoffzufuhr derart ansprechen, daß das Auskuppeln der elektromagnetischen Kupplung verzögert wird.

2. Steuersystem nach Anspruch 1, dadurch gekennzeichnet, daß die vierten (64) und die sechsten (63) Mittel einen Computer aufweisen.

## Revendications

1. Système de commande pour un véhicule mû par un moteur par l'intermédiaire d'une transmission à rapport variable en continu comportant un embrayage électromagnétique pour relier le vilebrequin du moteur à l'arbre d'entrée de la transmission, système qui comprend des premiers moyens (52) pour produire un signal électrique quand la vitesse du véhicule dépasse une valeur prédéterminée: de seconds moyens (54, 55) pour indiquer la sélection de l'état de marche avant de la transmission, des troisièmes moyens (53) pour produire un signal quand le conducteur n'appuie pas sur la pédale de l'accélérateur; des quatrièmes moyens (64) arrangés pour couper l'arrivée du carburant au moteur quand des signaux sont reçus conjointement des premiers, des seconds et des troisièmes moyens; est caractérisé par des cinquièmes moyens indiquant que l'état neutre de la transmission a été sélectionné à la disparition de l'indication des seconds moyens; des sixièmes moyens (63) répondant au signal de sortie des cinquièmes moyens alors que l'alimentation en carburant est coupée, en différant le débrayage de l'embrayage électromagnétique.

2. Système de commande selon la revendication 1, caractérisé en ce que les quatrièmes et les sixièmes moyens (64, 63) comprennent un ordinateur.

FIG. 1a

FIG. 1b

FIG. 2

EP 0 172 601 B1

IGNITION PULSE GENERATOR 51

ENGINE SPEED DECISION SECTION 59

50

ACCELERATOR PEDAL SWITCH 53

R RANGE SWITCH 56

INVERTED CLUTCH CURRENT DECISION SECTION 61

CLUTCH CURRENT SETTING SECTION 62

OUTPUT DECISION SECTION 63

COIL 15

D RANGE SWITCH 54

Ds RANGE SWITCH 55

VEHICLE PULSE GENERATOR 52

VEHICLE SPEED DECISION SECTION 60

CHOKE VALVE SWITCH 58

AIR CONDITIONER SWITCH 57

FUEL CUT OFF DECISION SECTION 64

ACTUATOR 65

3

# FIG. 3